(19) Europäisches Patentamt
European Patent Office
Office européen des brevets

(11) **EP 4 579 813 A1**

(12) **EUROPEAN PATENT APPLICATION**

(43) Date of publication:
**02.07.2025 Bulletin 2025/27**

(21) Application number: **24223496.1**

(22) Date of filing: **27.12.2024**

(51) International Patent Classification (IPC):
$H01M\ 4/58^{(2010.01)}$    $H01M\ 4/505^{(2010.01)}$
$H01M\ 4/36^{(2006.01)}$    $H01M\ 4/136^{(2010.01)}$
$H01M\ 10/0525^{(2010.01)}$    $H01M\ 4/02^{(2006.01)}$

(52) Cooperative Patent Classification (CPC):
**H01M 4/5825; H01M 4/136; H01M 4/364;**
**H01M 4/505; H01M 10/0525;** H01M 2004/021;
H01M 2004/028; Y02E 60/10

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **29.12.2023 CN 202311872054**

(71) Applicant: **BYD Company Limited**
**Shenzhen, Guangdong 518118 (CN)**

(72) Inventors:
• **YE, Yuzhen**
 **Shenzhen, 518118 (CN)**
• **DENG, Xuanwei**
 **Shenzhen, 518118 (CN)**
• **HE, Kefeng**
 **Shenzhen, 518118 (CN)**
• **ZHUANG, Minghao**
 **Shenzhen, 518118 (CN)**
• **DENG, Ruoyi**
 **Shenzhen, 518118 (CN)**

(74) Representative: **Mathys & Squire**
**The Shard**
**32 London Bridge Street**
**London SE1 9SG (GB)**

(54) **POSITIVE ELECTRODE ACTIVE MATERIAL, POSITIVE ELECTRODE, BATTERY, AND DEVICE**

(57) The present disclosure provides a positive electrode active material, a positive electrode, a battery, and a device. The positive electrode active material comprises a first lithium iron manganese phosphate particle and a second lithium iron manganese phosphate particle. The particle size $D_{50}$ of the first lithium iron manganese phosphate particle is less than the particle size $D_{50}$ of the second lithium iron manganese phosphate particle. The Mn/(Mn+Fe) molar ratio in the first lithium iron manganese phosphate particle is x, the Mn/(Mn+Fe) molar ratio in the second lithium iron manganese phosphate particle is y, and x>y. The positive electrode active material of the present disclosure comprises two kinds of lithium iron manganese phosphate particles having different particle size ranges and different manganese contents in combination. The first lithium iron manganese phosphate particle of small particle size particle having a high manganese content supports the instantaneous high-power output of the battery in the process of high-rate discharge, to improve the rate performance of the battery. The second lithium iron manganese phosphate particle of large particle size having a low manganese content improves the capacity per gram of the active material, enhances the compaction density, and increases the energy density of the battery.

FIG. 2

EP 4 579 813 A1

**Description**

<u>FIELD</u>

The present disclosure relates to the technical field of batteries, and specifically to a positive electrode active material, a positive electrode, a battery, and a device.

<u>BACKGROUND</u>

Among existing positive electrode active materials, lithium manganese iron phosphate ($LiMn_xFe_{(1-x)}PO_4$), as a polyanionic phosphate material with an olivine structure, has a high working voltage plateau (4. 1V), and thus a high theoretical energy density.

However, the introduction of element manganese leads to the decrease in intrinsic ionic conductivity of the active material, affecting the rate performance of the battery. To overcome this technical problem, at present the particle size of lithium manganese iron phosphate primary particles can be reduced to shorten the ion migration path. However, the reduction of the particle size will reduce the compaction density of the material and affect the energy density of the battery. Therefore, it is a great challenge to ensure the rate performance of the battery while improving the compaction density of the battery.

<u>SUMMARY</u>

In view of the defects in the related art, an object of the present disclosure is to provide a positive electrode active material, a positive electrode, a battery, and a device to achieve good rate performance and good energy density of the battery.

In a first aspect, the present disclosure provides a positive electrode active material, which comprises a first lithium iron manganese phosphate particle and a second lithium iron manganese phosphate particle. The particle size $D_{50}$ of the first lithium iron manganese phosphate particle is less than the particle size $D_{50}$ of the second lithium iron manganese phosphate particle. The Mn/(Mn+Fe) molar ratio in the first lithium iron manganese phosphate particle is x, the Mn/(Mn+Fe) molar ratio in the second lithium iron manganese phosphate particle is y, and x>y.

The lithium iron manganese phosphate particle of small particle size has a short ion migration path, which reduces the impedance, to improve the capacity per gram of the active material and improve the rate performance of the battery. The lithium iron manganese phosphate particle of large particle size has a small specific surface area, a relatively good processability, to improve the compaction density of the active material, and improve the energy density of the battery. In the active material of the present disclosure, the first lithium iron manganese phosphate particle of small particle size and the second lithium iron manganese phosphate particle of large particle size are blended, to ensure the rate performance and the compaction density of the battery. Meanwhile, since the element manganese has a high working voltage plateau, which affects the ionic conductivity of the material, the energy density of the active material is improved by setting the molar content of the element manganese in the first lithium iron manganese phosphate of small particle size to be higher than the molar content of the element manganese in the second lithium iron manganese phosphate particle.

That is, the active material of the present disclosure comprises two kinds of lithium iron manganese phosphate particles having different particle sizes and different Mn/(Mn+Fe) molar ratios in combination, wherein the first lithium iron manganese phosphate particle of small particle size having a high Mn/(Mn+Fe) molar ratio can support the instantaneous high-power output of the battery in the process of high-rate discharge, to improve the rate performance of the battery; and the second lithium iron manganese phosphate particle of large particle size having a low Mn/(Mn+Fe) molar ratio has a high compaction density, to improve the volumetric energy density of the battery.

In an embodiment, the particle size $D_{50}$ of the first lithium iron manganese phosphate particle ranges from 50 nm to 350 nm, and the particle size $D_{50}$ of the second lithium iron manganese phosphate particle ranges from 500 nm to 2000 nm.

In an embodiment, $0.7 \leq x \leq 0.85$, and $0.3 \leq y \leq 0.65$.

In an embodiment, the weight ratio of the first lithium iron manganese phosphate particle to the second lithium iron manganese phosphate particle in the positive electrode active material ranges from 0.2 to 1.

In an embodiment, $0.7 \leq x \leq 0.8$, and $0.4 \leq y \leq 0.6$.

In an embodiment, the Mn/(Mn+Fe) molar ratio in the positive electrode active material ranges from 0.36 to 0.75.

In an embodiment, the material of the first lithium iron manganese phosphate particle comprises at least one of $LiMn_{0.8}Fe_{0.2}PO_4$ and $LiMn_{0.7}Fe_{0.3}PO_4$.

In an embodiment, the material of the second lithium iron manganese phosphate particle comprises at least one of $LiMn_{0.55}Fe_{0.45}PO_4$ and $LiMn_{0.4}Fe_{0.6}PO_4$.

In a second aspect, the present disclosure provides a positive electrode, which comprises the positive electrode active material according to any one of the above embodiments.

It will be understood that due to the use of the positive electrode active material provided in the first aspect of the present disclosure, the positive electrode provided in the second aspect of the present disclosure also has all the beneficial effects achievable in any one of the above embodiments in the first aspect of the present disclosure.

In an embodiment, the positive electrode comprises a current collector and a positive electrode active material layer arranged on the current collector. The positive electrode active material layer comprises the positive electrode active material. The compaction density of the positive electrode active material layer ranges from 2.35 g/cm$^3$ to 2.62 g/cm$^3$.

In a third aspect, the present disclosure further provides a battery. The battery comprises a positive electrode provided in any one of the embodiments in the second aspect of the present disclosure.

In a fourth aspect, the present disclosure further provides a device. The device comprises a battery provided in any one of the embodiments in the third aspect of the present disclosure. The device comprises an electric apparatus or an energy storage system.

It will be understood that due to the use of the positive electrode provided in the second aspect of the present disclosure, the battery provided in the third aspect and the device provided in the fourth aspect of the present disclosure also have all the beneficial effects achievable in all the embodiments in the second aspect.

## BRIEF DESCRIPTION OF THE DRAWINGS

FIG. 1 is a schematic cross-sectional view showing a structure of a battery provided in an embodiment of the present disclosure;

FIG. 2 is a schematic structural view of a positive electrode provided in an embodiment of the present disclosure;

FIG. 3 is a schematic structural view of a positive electrode active material in an embodiment of the present disclosure; and

FIG. 4 shows a cross-sectional model where a first lithium iron manganese phosphate particle and a second lithium iron manganese phosphate particle are filled to each other in an embodiment of the present disclosure.

List of reference numerals: 300-battery; 301-negative electrode; 302-insulating separator; 200-positive electrode; 201-current collector; 202-positive electrode active material layer; 100-positive electrode active material; 10-first lithium iron manganese phosphate particle; 20-second lithium iron manganese phosphate particle.

## DETAILED DESCRIPTION

To facilitate the understanding of the present disclosure, the present disclosure will be described fully below in conjunction with the drawings. Preferred embodiments of the present disclosure are given in the drawings. However, the present disclosure can be implemented in many different forms, and is not limited to the embodiments described herein. Conversely, these embodiments are provided for thorough and comprehensive understanding of the disclosure of the present disclosure.

The following descriptions of various embodiments are provided to exemplify the specific embodiments of the present disclosure with reference to accompanying drawings. Herein, the numberings for the components, for example, "first", "second", and others, are merely used for the purpose of distinguishing the described objects and have no order or technical meaning. The "connection" and "coupling" mentioned in the present disclosure are commercially available, include direct and indirect connection (coupling) unless otherwise specified. The directional terms mentioned in the present disclosure, For example, "upper", "lower", "front", "rear", "left", "right", "inner", "outer", "side" and so on, are only given with reference to the direction of the drawings. Therefore, the directional terms used are to better and more clearly explain and understand the present disclosure, instead of indicating or implying that the device or element referred to needs to have a specific orientation, or must be constructed and operated in a particular direction. Therefore, they cannot be construed as limiting on the present application.

In the description of the present application, it will be understood that unless otherwise clearly specified and defined, the terms "mounting", "connection", and "connecting" should be understood in a broad sense. For example, the connection may be a fixed connection, a detachable connection, or an integral connection; or the connection may be a mechanical connection; or the connection may be a direct connection, or an indirect connection via an intermediate structure; or the connection may be the internal communication of two elements. For those of ordinary skill in the art, specific meanings of the above terms in the present disclosure can be understood according to specific circumstances. It will be understood that the term "first", "second", and others used in the specification, claims and drawings of the present disclosure are used to distinguish different objects, rather than describe a particular order. Additionally, as used in the present disclosure, the term "include", "may include", "comprise", or "may comprise" indicate the presence of the disclosed corresponding functions, operations, elements, etc., and do not limit one or more other functions, operations, elements, etc. Additionally, the term "include" or "comprise" indicate the presence of corresponding features, numbers, steps, operations, elements, and components or combinations thereof disclosed in the specification, but do not exclude the presence or addition of one or more other features, numbers, steps, operations, elements, and components or combinations thereof disclosed in the specification, are intended to cover a non-exclusive inclusion.

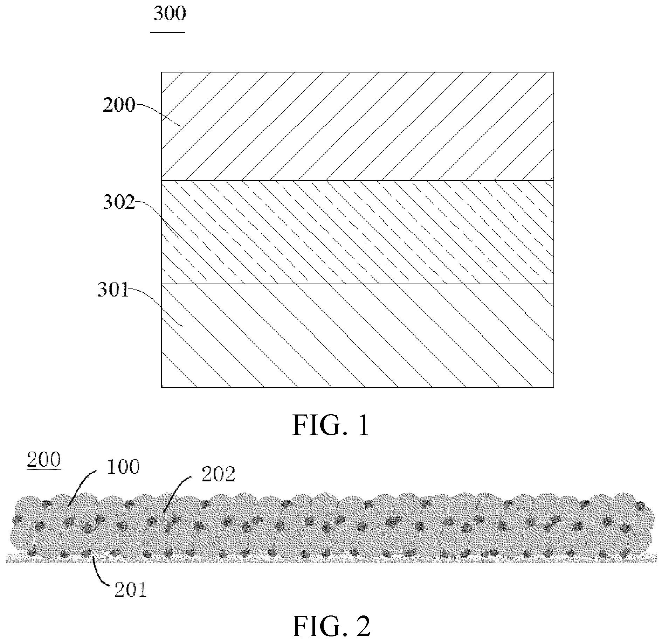

Referring to FIG. 1, FIG. 1 is a schematic cross-sectional view showing a structure of a battery 300 provided in an embodiment of the present disclosure.

As shown in FIG. 1, the battery 300 of the present disclosure comprises a negative electrode 301, an insulating separator 302, and a positive electrode 200. The negative electrode 301, the insulating separator 302, and the positive electrode 200 are stacked in sequence to form an electrode core of the battery 300. The insulating separator 302 is configured to insulate the positive electrode 200 and the negative electrode 301 to avoid the conduction of the positive and negative electrodes. In an embodiment, the battery 300 further comprises an electrolyte solution (not shown). The negative electrode 301, the insulating separator 302, and the positive electrode 200 are soaked in the electrolyte solution. The electrolyte solution serves as a vehicle, to transport ions and conduct a current between the positive electrode 200 and the negative electrode 301.

Referring to FIG. 2, FIG. 2 is a schematic structural view of a positive electrode 200 provided in an embodiment of the present disclosure.

As shown in FIG. 2, the positive electrode 200 of the present disclosure comprises a current collector 201 and a positive electrode active material layer 202. The positive electrode active material layer 202 comprises a positive electrode active material 100, and is distributed on a surface of the current collector 201. The current collector 201 is formed of a conductive material. The current collector 201 is not only able to be used as a carrier of the positive electrode active material 100, but also collect the current generated by the positive electrode active material 100 and conduct it to the outside of the battery 300. It will be understood that in an embodiment, the current collector 201 may be made of a conductive material such as an aluminum foil or a copper foil or a composite copper/aluminum foil, which is not particularly limited in the present disclosure.

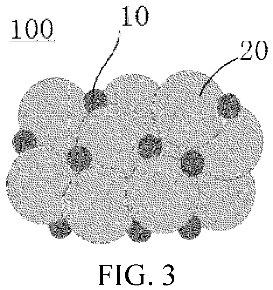

Referring to FIG. 3, FIG. 3 is a schematic structural view of a positive electrode active material 100 in an embodiment of the present disclosure.

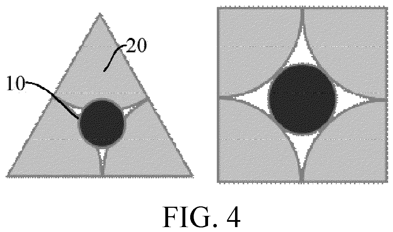

As shown in FIG. 3, the positive electrode active material 100 of the present disclosure comprises a first lithium iron manganese phosphate particle 10 and a second lithium iron manganese phosphate particle 20. The particle size $D_{50}$ of the first lithium iron manganese phosphate particle 10 is less than the particle size $D_{50}$ of the second lithium iron manganese phosphate particle 20. The first lithium iron manganese phosphate particle 10 of small particle size can be filled in the void between the second lithium iron manganese phosphate particles 20 of large particle size (see FIG. 4, where FIG. 4 shows a cross-sectional model where the first lithium iron manganese phosphate particle 10 and the second lithium iron manganese phosphate particle 20 are packed with each other in an embodiment of the present disclosure).

It will be understood that when only one kind of lithium iron manganese phosphate particle is used as the positive electrode active material 100 of the positive electrode 200, that is, only lithium iron manganese phosphate particle of small particle size or only lithium iron manganese phosphate particle of large particle size is used, lithium iron manganese phosphate of small particle size alone has a large specific surface area, a relatively poor processability, and a low compaction density, affecting the energy density of the battery 300; and lithium iron manganese phosphate of large particle size alone has a long ion migration path, which increase the impedance, thus affecting the rate performance of the battery 300. That is, the use of one kind of lithium iron manganese phosphate particle alone cannot ensure a high rate performance and a high energy density at the same time.

In the positive electrode active material 100 of the present disclosure, the first lithium iron manganese phosphate particle 10 of small particle size and the second lithium iron manganese phosphate particle 20 of large particle size are blended and filled to each other, to ensure the rate performance and the compaction density of the battery 300. Meanwhile, since the element manganese has a high working voltage plateau, but affects the ionic conductivity of the material, in the present disclosure, the Mn/(Mn+Fe) molar ratio in the first lithium iron manganese phosphate particle is x, the Mn/(Mn+Fe) molar ratio in the second lithium iron manganese phosphate particle is y, and x>y. In the present disclosure, the Mn/(Mn+Fe) molar ratio refers to the proportion of moles of element Mn to the total moles of elements Mn and Fe in lithium iron manganese phosphate. Specifically, x refers to the proportion of moles of element Mn to the total moles of elements Mn and Fe in the first lithium iron manganese phosphate material; and y refers to the proportion of moles of element Mn to the total moles of elements Mn and Fe in the second lithium iron manganese phosphate material. The energy density of the positive electrode active material 100 is improved by setting the molar content of the element manganese in the first lithium iron manganese phosphate of small particle size to be higher than the molar content of the element manganese in the second lithium iron manganese phosphate particle 20 in the positive electrode active material 100.

That is, the positive electrode active material 100 of the present disclosure comprises two kinds of lithium iron manganese phosphate particles having different particle sizes $D_{50}$ and different Mn/(Mn+Fe) molar ratios in combination, where the first lithium iron manganese phosphate particle 10 of small particle size having a high Mn/(Mn+Fe) molar ratio can support the instantaneous high-power output of the battery 300 in the process of high-rate discharge, to improve the rate performance of the battery 300; and the second lithium iron manganese phosphate particle 20 of large particle size having a low Mn/(Mn+Fe) molar ratio can improve the compaction density of the positive electrode 200, to improve the volumetric energy density of the battery 300.

In the present disclosure, the Mn/(Mn+Fe) molar ratio in the first lithium iron manganese phosphate particle and the second lithium iron manganese phosphate particle can be determined by an inductively coupled plasma (ICP) spectrometer.

In an embodiment, the particle size $D_{50}$ of the first lithium iron manganese phosphate particle 10 ranges from 50 nm to 350 nm, and the particle size $D_{50}$ of the second lithium iron manganese phosphate particle 20 ranges from 500 nm to 2000 nm.

It will be understood that the particle size $D_{50}$ of the first lithium iron manganese phosphate particle 10 ranging from 50 nm to 350 nm means that the median particle size $D_{50}$ of the first lithium iron manganese phosphate particle 10 ranges from 50 nm to 350 nm. Optionally, the median particle size $D_{50}$ of the first lithium iron manganese phosphate particle 10 ranges from 50 to 150 nm, 100 nm to 200 nm, or 200 nm to 350 nm.

Similarly, the particle size of the second lithium iron manganese phosphate particle 20 ranging from 500 nm to 2000 nm means that the median particle size $D_{50}$ of the second lithium iron manganese phosphate particle 20 ranges from 500 nm to 2000 nm. Optionally, the median particle size $D_{50}$ of the second lithium iron manganese phosphate particle 20 ranges from 600 nm to 1000 nm, 700 nm to 1500 nm, or 1200 nm to 2000 nm.

The median particle size $D_{50}$, also known as the volume average particle size, represents a corresponding particle size when the cumulative volume distribution percentage of a material reaches 50%. It can be tested, for example, by Malvin laser particle size analyzer following GB/T19077-2016 Particle size analysis-Laser diffraction methods.

It will be understood that in this embodiment, the median particle size of the first lithium iron manganese phosphate particle 10 is set in the range of 50 nm to 350 nm, and the median particle size of the second lithium iron manganese phosphate particle 20 is set in the range of 500 nm to 2000 nm. These can improve the processability of the positive electrode active material 100, reduce the physical gelling, and improve the overall consistency of the positive electrode active material 100. In addition, the transport of ions in the positive electrode active material 100 can be improved, to further improve the cycle performance of the battery 300.

In an embodiment, the Mn/(Mn+Fe) molar ratio x in the first lithium iron manganese phosphate particle 10 ranges from 70% to 85%, and the Mn/(Mn+Fe) molar ratio y in the second lithium iron manganese phosphate particle 20 ranges from 30% to 65%.

It will be understood that by setting the Mn/(Mn+Fe) molar ratio x of the first lithium iron manganese phosphate particle in the range of 70% to 85%, the active material is ensured to have a high working voltage plateau and a certain rate performance; and by setting the Mn/(Mn+Fe) molar ratio y of the second lithium iron manganese phosphate particle in the range of 30% to 65%, the active material is ensured to have a low intrinsic impedance and a good capacity per gram. The capacity per gram refers to the capacity released per gram of active material, in mAh/g. By setting the Mn/(Mn+Fe) molar ratio x and y in the first lithium iron manganese phosphate particle 10 and the second lithium iron manganese phosphate particle 20 respectively in the range of 0.7 to 0.85 and in the range of 0.30 to 0.65, the impact on the conductivity of the positive electrode active material 100 and the reduction of the rate performance of the battery 300 due to an excessively high manganese content are avoided. Moreover, a low working voltage plateau and the reduction of the energy density of the battery 300 due to an excessively low manganese content can also be avoided.

In an embodiment, in the positive electrode active material 100, the weight ratio of the first lithium iron manganese phosphate particle 10 to the second lithium iron manganese phosphate particle 20 ranges from 0.2 to 1.

Further optionally, the weight ratio of the first lithium iron manganese phosphate particle 10 to the second lithium iron manganese phosphate particle 20 may be, for example, 1:4, 1:3, or 3:7. It will be understood that by setting the weight ratio of the first lithium iron manganese phosphate particle 10 to the second lithium iron manganese phosphate particle 20 in the above range, the mixing and filling effect of the first lithium iron manganese phosphate particle 10 and the second lithium iron manganese phosphate particle 20 is ensured, to enable the battery 300 to have a higher energy density and a higher rate performance.

In an embodiment, the Mn/(Mn+Fe) molar ratio x and y in the first lithium iron manganese phosphate particle 10 and the second lithium iron manganese phosphate particle 20 meet $0.7 \leq x \leq 0.8$, and $0.4 \leq y \leq 0.6$.

In an embodiment, in the positive electrode active material, the Mn/(Mn+Fe) molar ratio in the positive electrode active material ranges from 0.36 to 0.75. That is, if the sum of moles of Mn and Fe in the first lithium iron manganese phosphate and moles of Mn and Fe in the second lithium iron manganese phosphate in the positive electrode active material is recorded as $N_{total}$, and the sum of moles of the element manganese in the first lithium iron manganese phosphate and moles of the element manganese in the second lithium iron manganese phosphate in the positive electrode active material is recorded as $n_{total}$, then $n_{total}/N_{total}$ ranges from 0.36 to 0.75.

In this embodiment, after the two kinds of particles are mixed and filled, the ratio of the total molar content of the element manganese to the sum of the molar content of Mn and Fe in the first lithium iron manganese phosphate and the molar content of Mn and Fe in the second lithium iron manganese phosphate ranges from 0.36 to 0.75, to avoid the impact on the rate performance of the battery 300 due to elevated impedance caused by an excessively high content of element manganese, and avoid the impact on the theoretical energy density of the battery 300 due to reduced voltage caused by an excessively low content of element manganese.

In an embodiment, the material of the first lithium iron manganese phosphate particle 10 comprises at least one of $LiMn_{0.8}Fe_{0.2}PO_4$ and $LiMn_{0.7}Fe_{0.3}PO_4$.

In this embodiment, the material of the first lithium iron manganese phosphate particle 10 may be $LiMn_{0.8}Fe_{0.2}PO_4$ or $LiMn_{0.7}Fe_{0.3}PO_4$, or a combination of $LiMn_{0.8}Fe_{0.2}PO_4$ and $LiMn_{0.7}Fe_{0.3}PO_4$. It will be understood that since the redox potential of manganese ions is higher than the redox potential of iron ions, by setting the material of the first lithium iron manganese phosphate particle 10 to be at least one of $LiMn_{0.8}Fe_{0.2}PO_4$ and $LiMn_{0.7}Fe_{0.3}PO_4$, elements manganese and iron in the first lithium iron manganese phosphate particle 10 have a suitable ratio, to ensure that the first lithium iron manganese phosphate particle 10 has a higher working voltage plateau, without reducing the theoretical specific capacity of the positive electrode active material 100.

In an embodiment, the material of the second lithium iron manganese phosphate particle 20 comprises at least one of $LiMn_{0.55}Fe_{0.45}PO_4$ and $LiMn_{0.4}Fe_{0.6}PO_4$.

In this embodiment, the material of the second lithium iron manganese phosphate particle 20 may be $LiMn_{0.55}Fe_{0.45}PO_4$ or $LiMn_{0.4}Fe_{0.6}PO_4$, or a combination of $LiMn_{0.55}Fe_{0.45}PO_4$ and $LiMn_{0.4}Fe_{0.6}PO_4$.

In an embodiment, the first lithium iron manganese phosphate particle 10 comprises a first particle set and a second particle set. The particle size $D_{50}$ of the first lithium iron manganese phosphate particle 10 in the first particle set is less than the particle size $D_{50}$ of the first lithium iron manganese phosphate particle 10 in the second particle set. The Mn/(Mn+Fe) molar ratio of the first lithium iron manganese phosphate particle 10 in the first particle set is greater than the Mn/(Mn+Fe) molar ratio of the first lithium iron manganese phosphate particle 10 in the second particle set.

It will be understood that by configuring the first lithium iron manganese phosphate particle 10 to include two sets of particles with different particle sizes and different element manganese contents, lithium iron manganese phosphate particles of various particle sizes and various Mn/(Mn+Fe) molar ratios are combined, to achieve uniform filling and ensure the uniform current distribution in the positive electrode active material 100, further improve the overall compaction density of the positive electrode active material 100, and avoid the decline of the capacity of the battery 300 due to different deterioration degrees in the battery 300 caused by uneven current distribution.

In an embodiment, the second lithium iron manganese phosphate particle 20 comprises a third particle set and a fourth particle set. The particle size $D_{50}$ of the second lithium iron manganese phosphate particle 20 in the third particle set is less than the particle size $D_{50}$ of the second lithium iron manganese phosphate particle 20 in the fourth particle set. The Mn/(Mn+Fe) molar ratio of the second lithium iron manganese phosphate particle 20 in the third particle set is greater than the Mn/(Mn+Fe) molar ratio of the second lithium iron manganese phosphate particle 20 in the fourth particle set.

It will be understood that in this embodiment, by configuring the second lithium iron manganese phosphate particle 20 to include two sets of particles with different particle sizes and different element manganese contents, lithium iron manganese phosphate particles of various particle sizes and various Mn/(Mn+Fe) molar ratios are combined, to achieve uniform filling and ensure the uniform current distribution in the positive electrode active material 100, further improve the overall compaction density of the positive electrode active material 100, and avoid the decline of the capacity of the battery 300 due to different deterioration degrees in the battery 300 caused by uneven current distribution.

In an embodiment, the positive electrode 200 further comprises a dispersant, a conductive agent, and a binder (not shown). The positive electrode active material 100 can be evenly distributed by setting the dispersant. It will be understood that the conductive agent is set to collect a current between the lithium iron manganese phosphate particles and between the lithium iron manganese phosphate particle and the current collector 201, to reduce the contact resistance of the electrode, and accelerate the movement of electrons. Moreover, the migration rate of lithium ions in the lithium iron manganese phosphate particle can also be effectively enhanced, to improve the charging and discharging efficiency of the battery 300. The binder is set to bond and fix the lithium iron manganese phosphate particles, whereby the lithium iron manganese phosphate particles have a certain structural strength. Since the binder is usually in the form of a powder, in the manufacturing process of the positive electrode 200, the binder is dissolved in a dispersant, to allow it to be in full contact with the lithium iron manganese phosphate particle and the conductive agent and evenly dispersed in the dispersant. The dispersant, the binder, and the conductive agent may be conventional choices in the battery field. For example, the conductive agent can be one or more selected from conductive carbon black (such as acetylene black, ketjen black, Super-P, 350G carbon black), carbon nanotubes (single-walled carbon nanotubes or multi-wall carbon nanotubes), graphene, and carbon fibers, and ordered mesoporous carbon. The binder can be, but is not limited to, one or more selected from polyvinylidene fluoride (PVDF), polytetrafluoroethylene (PTFE), polyolefins (such as polyethylene (PE) and polypropylene (PP)), polyacrylonitrile (PAN), polyacrylic acid (PAA), polyacrylate, polyimide (PI), styrene-butadiene rubber (SBR), sodium carboxymethyl cellulose (CMC), sodium alginate (SA), and gelatin.

In an embodiment, the positive electrode 200 further comprises a current collector 201. The positive electrode active material 100 is mixed with the dispersant, the conductive agent, and the binder, and then coated on the surface of the current collector. The current collector 201 is used to collect the current generated by the positive electrode active material 100 and conduct it out.

The current collector 201 may comprise, but is not limited to, an aluminum foil, an aluminum alloy foil, an aluminum-plated polymer film, or the above-mentioned materials coated with carbon on the surface. In some embodiments of the present disclosure, the current collector 201 is an aluminum foil, a carbon coated aluminum foil.

In an embodiment, the compaction density of the positive electrode 200 ranges from 2.35 g/cm$^3$ to 2.62 g/cm$^3$.

In the present disclosure, the negative electrode 301 of the battery 300 generally comprises a negative electrode current collector and a negative electrode material layer arranged on at least one side surface of the negative electrode current collector. The negative electrode material layer generally contains a negative electrode active material, the conductive agent, and a binder. In an embodiment of the present disclosure, the negative electrode active material for the lithium ion battery may be one or more selected from hard carbon, soft carbon, graphite, mesocarbon microspheres, and a silicon-carbon composite material.

The insulating separator 302 is used to isolate the positive electrode 200 and the negative electrode 301, to keep the insulation and liquid retention therebetween. The insulating separator 302, the positive electrode 200, and the negative electrode 301 jointly form an electrode core of the battery 300. The electrode core is accommodated in a battery casing, and impregnated by the electrolyte solution contained in the casing. In some embodiments of the present disclosure, the lithium battery can be assembled by the following method. The positive electrode, the separator, and the negative electrode are sequentially stacked, and fabricated into an electrode core. The electrode core is accommodated in a battery casing, an electrolyte solution is injected, and then the battery casing is sealed, to produce a battery. The electrode core can be wound or laminated.

In the present disclosure, the insulating separator 302 may be made of any separator material for use in the battery. Exemplarily, the insulating separator 302 may comprise, but is not limited to, a polymer separator such as a single-layer polypropylene (PP) film, a single-layer polyethylene (PE) film, a two-layer PP/PE film, a two-layer PP/PP film, and a three-layer PP/PE/PP film, or non-woven cloth. The electrolyte solution comprises an electrolyte salt and an organic solvent. The specific types and compositions of the electrolyte salt and the organic solvent are conventional choices in the field of batteries, and can be selected according to actual needs.

In an embodiment, the battery 300 has a discharge specific capacity of 105 mAh/g or higher at a rate of 5C; and the battery 300 has a volumetric specific capacity of 1364.5 mWh/cm$^3$ or higher.

In the present disclosure, the $D_{50}$ and Mn/(Mn+Fe) molar ratio of the first lithium iron manganese phosphate particle and the second lithium iron manganese phosphate particle are determined as follows.

The lithium ion battery is completely discharged and then disassembled, to obtain the positive electrode. The positive electrode is soaked in dimethyl carbonate (DMC) for 10 min to 20 min to wash off the residual electrolyte. The positive electrode is dried and soaked in water to deactivate the binder, and the coating material layer is peeled from the positive electrode current collector. Then, the coating material layer is dissolved in the solvent N-methylpyrrolidone (NMP), and heated at 80°C to accelerate the dissolution. The dissolved material is filtered under suction, and separated to obtain a solid material. The solid material is washed with NMP. Then, the obtained liquid mixture containing the solid material and NMP is centrifuged at a rotation speed of 5000 rpm. The upper-layer material containing the conductive agent is discarded, and the lower-layer material containing lithium iron manganese phosphate (LMFP) is collected. The material containing LMFP is repeatedly washed with NMP and then centrifuged for 6 times. Because the $D_{50}$ of the two LMFP materials is quite different, they can be further separated by reducing the rotation speed. Then the rotation speed is adjusted to 3000 rpm for centrifugal treatment. The second LMFP material may be settled down to the lower layer. The upper liquid is filtered under suction to obtain the first LMFP material.

The $D_{50}$ and the Mn/(Mn+Fe) molar ratio of two LMFP powders separated can be tested by a laser particle size analyzer and ICP respectively. Specifically, the $D_{50}$ can be tested, for example, by Malvin laser particle size analyzer following GB/T19077-2016 Particle size analysis-Laser diffraction methods.

Additionally, the Mn/Fe content can also be directly tested by SEM-EDS. For example, the cross section of the electrode sheet is obtained by CP treatment (Ar ion milling) of the electrode sheet. Large-particle and small-particle LMFP materials are subjected to SEM-EDS scanning respectively, to obtain the Mn/Fe weight ratio. Then, the Mn/(Mn+Fe) molar ratio can be further calculated.

The Mn/(Mn+Fe) molar ratio in the positive electrode active material is tested as follows. The lithium ion battery is completely discharged and then disassembled, to obtain the positive electrode. The positive electrode is soaked in DMC for 10 min to 20 min to wash off the residual electrolyte. The positive electrode is dried and soaked in water to deactivate the binder, and peel the coating material layer from the positive electrode current collector. Then, the coating material layer is dissolved in the solvent N-methylpyrrolidone (NMP), and heated at 80°C to accelerate the dissolution. The dissolved material is filtered under suction, and separated to obtain a solid material. The solid material is washed with NMP. Then, the obtained liquid mixture containing the solid material and NMP is centrifuged at a rotation speed of 5000 rpm. The upper-layer material containing the conductive agent is discarded, and the lower-layer material containing lithium iron manganese phosphate (LMFP) is collected. The Mn/(Mn+Fe) molar ratio is tested by ICP

The possible beneficial effects of the positive electrode active material 100 according to the present disclosure are explained through comparison of some examples of the positive electrode active material 100 in the present disclosure and some examples in related art.

### Example 1

In Example 1, the material of the first lithium iron manganese phosphate particle is $LiMn_{0.8}Fe_{0.2}PO_4$, and the particle size $D_{50}$ is 150 nm. The second lithium iron manganese phosphate particle is $LiMn_{0.6}Fe_{0.4}PO_4$, and the particle size $D_{50}$ is 1000 nm. The weight ratio of the first lithium iron manganese phosphate particle to the second lithium iron manganese phosphate particle is 0.25.

### Example 2

The positive electrode active material provided in Example 2 is different from the positive electrode active material in Example 1 in that in the positive electrode active material provided in Example 2, the particle size $D_{50}$ of the first lithium iron manganese phosphate particle is 300 nm.

### Example 3

The positive electrode active material provided in Example 3 is different from the positive electrode active material in Example 1 in that in the positive electrode active material provided in Example 3, the material of the first lithium iron manganese phosphate particle is $LiMn_{0.7}Fe_{0.3}PO_4$.

### Example 4

The positive electrode active material provided in Example 4 is different from the positive electrode active material in Example 1 in that in the positive electrode active material provided in Example 4, the material of the second lithium iron manganese phosphate particle is $LiMn_{0.5}Fe_{0.5}PO_4$, and the particle size $D_{50}$ is 1500 nm.

### Example 5

The positive electrode active material provided in Example 5 is different from the positive electrode active material in Example 1 in that in the positive electrode active material provided in Example 5, the weight ratio of the first lithium iron manganese phosphate particle to the second lithium iron manganese phosphate particle is 0.5.

### Example 6

The positive electrode active material provided in Example 6 is different from the positive electrode active material in Example 1 in that in the positive electrode active material provided in Example 6, the weight ratio of the first lithium iron manganese phosphate particle to the second lithium iron manganese phosphate particle is 1.

### Example 7

The positive electrode active material provided in Example 7 is different from the positive electrode active material in Example 1 in that in the positive electrode active material provided in Example 7, the weight ratio of the first lithium iron manganese phosphate particle to the second lithium iron manganese phosphate particle is 0.2.

### Example 8

The positive electrode active material provided in Example 8 is different from the positive electrode active material in Example 1 in that in the positive electrode active material provided in Example 8, the $D_{50}$ of the first lithium iron manganese phosphate particle is 350 nm, and the $D_{50}$ of the second lithium iron manganese phosphate particle is 2000 nm.

### Example 9

The positive electrode active material provided in Example 9 is different from the positive electrode active material in Example 1 in that in the positive electrode active material provided in Example 9, the particle size $D_{50}$ of the first lithium iron manganese phosphate particle is 50 nm, and the particle size $D_{50}$ of the second lithium iron manganese phosphate particle is 500 nm.

**Example 10**

The positive electrode active material provided in Example 10 is different from the positive electrode active material in Example 1 in that in the positive electrode active material provided in Example 10, the material of the first lithium iron manganese phosphate particle is $LiMn_{0.85}Fe_{0.15}PO_4$, and the material of the second lithium iron manganese phosphate particle is $LiMn_{0.65}Fe_{0.35}PO_4$.

**Example 11**

The positive electrode active material provided in Example 11 is different from the positive electrode active material in Example 1 in that in the positive electrode active material provided in Example 11, the material of the first lithium iron manganese phosphate particle is $LiMn_{0.7}Fe_{0.3}PO_4$, and the material of the second lithium iron manganese phosphate particle is $LiMn_{0.3}Fe_{0.7}PO_4$.

**Example 12**

The positive electrode active material provided in Example 12 is different from the positive electrode active material in Example 1 in that in the positive electrode active material provided in Example 12, the weight ratio of the first lithium iron manganese phosphate particle to the second lithium iron manganese phosphate particle is 1.2.

**Example 13**

The positive electrode active material provided in Example 13 is different from the positive electrode active material in Example 1 in that in the positive electrode active material provided in Example 13, the material of the second lithium iron manganese phosphate particle is $LiMn_{0.55}Fe_{0.45}PO_4$, and the weight ratio of the first lithium iron manganese phosphate particle to the second lithium iron manganese phosphate particle is 0.1.

**Example 14**

The positive electrode active material provided in Example 14 is different from the positive electrode active material in Example 1 in that in the positive electrode active material provided in Example 14, the material of the first lithium iron manganese phosphate particle is $LiMn_{0.4}Fe_{0.6}PO_4$, the material of the second lithium iron manganese phosphate particle is $LiMn_{0.2}Fe_{0.8}PO_4$, and the weight ratio of the first lithium iron manganese phosphate particle to the second lithium iron manganese phosphate particle is 0.2.

**Example 15**

The positive electrode active material provided in Example 15 is different from the positive electrode active material in Example 1 in that in the positive electrode active material provided in Example 15, the particle size $D_{50}$ of the first lithium iron manganese phosphate particle is 400 nm, the particle size $D_{50}$ of the second lithium iron manganese phosphate particle is 2000 nm, and the weight ratio of the first lithium iron manganese phosphate particle to the second lithium iron manganese phosphate particle is 0.3.

**Example 16**

The positive electrode active material provided in Example 16 is different from the positive electrode active material in Example 1 in that in the positive electrode active material provided in Example 16, the particle size $D_{50}$ of the first lithium iron manganese phosphate particle is 40 nm, the particle size $D_{50}$ of the second lithium iron manganese phosphate particle is 450 nm, and the weight ratio of the first lithium iron manganese phosphate particle to the second lithium iron manganese phosphate particle is 0.3.

**Comparative Example 1**

The positive electrode active material provided in Comparative Example 1 is different from the positive electrode active material in Example 1 in that in the positive electrode active material provided in Comparative Example 1, the material of the first lithium iron manganese phosphate particle is $LiMn_{0.4}Fe_{0.6}PO_4$, and the material of the second lithium iron manganese phosphate particle is $LiMn_{0.8}Fe_{0.2}PO_4$.

**Comparative Example 2**

In Comparative Example 2, only the first lithium iron manganese phosphate particle is contained in the positive electrode active material, and the second lithium iron manganese phosphate particle is not blended. The material of the first lithium iron manganese phosphate particle is $LiMn_{0.8}Fe_{0.2}PO_4$, and the particle size $D_{50}$ is 150 nm.

**Comparative Example 3**

In Comparative Example 3, only the first lithium iron manganese phosphate particle is contained in the positive electrode active material, and the second lithium iron manganese phosphate particle is not blended. The material of the first lithium iron manganese phosphate particle is $LiMn_{0.7}Fe_{0.3}PO_4$, and the particle size $D_{50}$ is 300 nm.

**Comparative Example 4**

In Comparative Example 4, only the second lithium iron manganese phosphate particle is contained in the positive electrode active material, and the first lithium iron manganese phosphate particle is not blended. The material of the second lithium iron manganese phosphate particle is $LiMn_{0.6}Fe_{0.4}PO_4$, and the particle size $D_{50}$ is 700 nm.

**Comparative Example 5**

In Comparative Example 5, only the second lithium iron manganese phosphate particle is contained in the positive electrode active material, and the first lithium iron manganese phosphate particle is not blended. The material of the second lithium iron manganese phosphate particle is $LiMn_{0.5}Fe_{0.5}PO_4$, and the particle size $D_{50}$ is 1000 nm.

The molar content of element manganese in and the particle size $D_{50}$ of the first lithium iron manganese phosphate particle (LMFP-1), the molar content of element manganese in and the particle size $D_{50}$ of the second lithium iron manganese phosphate particle (LMFP-2), the weight ratio of the first lithium iron manganese phosphate particle (LMFP-1) to the second lithium iron manganese phosphate particle (LMFP-2), and the ratios of the content of element manganese to other elements in the first lithium iron manganese phosphate particle (LMFP-1) and the second lithium iron manganese phosphate particle (LMFP-2) in the positive electrode active material in the examples and comparative examples are statistically calculated. The results are shown in Table 1.

Table 1: Parameter design of each example and comparative example

| | LMFP-1 | | LMFP-2 | | LMFP-1/LMFP-2 | Combined Mn content |
|---|---|---|---|---|---|---|
| | Mn content | $D_{50}$ | Mn content | $D_{50}$ | Weight ratio | |
| Example 1 | 80% | 150 | 60% | 1000 | 0.25 | 64% |
| Example 2 | 80% | 300 | 60% | 1000 | 0.25 | 64% |
| Example 3 | 70% | 150 | 60% | 1000 | 0.25 | 62% |
| Example 4 | 80% | 150 | 50% | 1500 | 0.25 | 56% |
| Example 5 | 80% | 150 | 60% | 1000 | 0.5 | 67% |
| Example 6 | 80% | 150 | 60% | 1000 | 1 | 70% |
| Example 7 | 80% | 150 | 60% | 1000 | 0.2 | 63% |
| Example 8 | 80% | 350 | 60% | 2000 | 0.25 | 64% |
| Example 9 | 80% | 50 | 60% | 500 | 0.25 | 64% |
| Example 10 | 85% | 150 | 65% | 1000 | 0.75 | 74% |
| Example 11 | 70% | 150 | 30% | 1000 | 0.5 | 43% |
| Example 12 | 80% | 150 | 60% | 1000 | 1.2 | 71% |
| Example 13 | 80% | 150 | 55% | 1000 | 0.1 | 57% |

(continued)

| | LMFP-1 | | LMFP-2 | | LMFP-1/LMFP-2 | Combined Mn content |
|---|---|---|---|---|---|---|
| | Mn content | $D_{50}$ | Mn content | $D_{50}$ | Weight ratio | |
| Example 14 | 40% | 150 | 20% | 1000 | 0.2 | 23% |
| Example 15 | 80% | 400 | 60% | 2000 | 0.3 | 65% |
| Example 16 | 80% | 40 | 60% | 450 | 0.3 | 65% |
| Comparative Example 1 | 40% | 150 | 80% | 1000 | 0.25 | 72% |
| Comparative Example 2 | 80% | 150 | | | | 80% |
| Comparative Example 3 | 70% | 300 | | | | 70% |
| Comparative Example 4 | | | 60% | 700 | | 60% |
| Comparative Example 5 | | | 50% | 1000 | | 50% |

The positive electrode active materials provided in Examples 1 to 11 and the positive electrode active materials provided in Comparative Examples 1 to 5 are assembled into a positive electrode sheet and a battery respectively according to the following methods.

The preparation method of the positive electrode sheet is as follows.

The positive electrode active material, the binder PVDF, the conductive agent carbon black, and the solvent NMP at a weight ratio of 100:2:2:60 are prepared into a positive electrode slurry. The positive electrode slurry is coated on both surfaces of an aluminum foil as the positive electrode current collector at a single-sided areal density of $200g/m^2$, dried, and rolled, to obtain a positive electrode sheet.

The preparation method of the battery is as follows.

1. The rolled positive electrode sheet is cut to form a disc with a diameter of 1.5 cm and weighed, to obtain the electrode sheet weight $m_{positive\ electrode}$. The weight $m_{Al}$ of an aluminum foil with the same area is weighed. The coating weight $m_{coating}=m_{positive\ electrode}-m_{Al}$ is obtained by the difference between the two parameters. The weight of LMFP material in a single positive electrode is m= $m_{coating}$ x 96.15%.

2. The positive electrode sheet cut into a disc with a diameter of 1.5 cm is dried in an oven at 105°C for 24 hrs to remove water. Then a CR2016 button half-battery is assembled. The positive electrode sheet-PP separator-lithium sheet-foamed nickel are respectively sequentially assembled and pressed into a casing, to form a button battery.

The compaction density of the positive electrode sheet and the electrochemical performances of the battery are tested as shown in Table 2. The test results are shown in Table 2. The test methods of various parameters are as follows:

Test method for compaction density of electrode sheet: The thickness of the positive electrode sheet and the aluminum foil is measured to obtain the thickness h of the coating. Compaction density D of electrode sheet = $m_{coating}/(\pi$ x 1.5cm x 1.5cm x h).

Test method for average voltage and discharge specific capacity at 0.1C: The normal-temperature capacity of the button semi-battery is specifically rated as follows. At normal temperature (25°C), the semi-battery is constant-current and constant-voltage charged to an upper-limit voltage of 4.35V at 0.1C, then constant-voltage charged to a cut-off current of 0.05C at 4.35V, and allowed to stand for 30min. Then, the semi-battery is constant-current discharged to a lower-limit voltage of 2.5V at 0.1C, and allowed to stand for 30 min. The charge and discharge steps are repeated 3 times. The 3rd discharge capacity is recorded as C0, in Ah. The average discharge voltage during the 3rd discharge is recorded. C0 is the rated normal-temperature capacity of the button semi-battery having the positive electrode. Discharge specific capacity at 0.1C = C0/total mass of positive electrode active material in a single battery.

Test method for discharge specific capacity at 5C: C0 is used as the rated capacity of the battery. The battery is constant-current and constant-voltage charged to an upper-limit voltage of 4.35V at 0.1C0, constant-voltage charged to a cut-off current of 0.05C0 at 4.35V, and allowed to stand for 30 min. Then, the semi-battery is constant-current discharged to a lower-limit voltage of 2.5V at 5C0, and allowed to stand for 30 min. The discharge capacity C1 is recorded, which is the discharge capacity of the battery at 5C. Similarly, Discharge specific capacity at 5C = C1/total mass of positive electrode active material in a single battery.

The discharge specific capacity at 5C is mainly used to characterize the rate performance of the battery.

Gravimetric energy density =discharge specific capacity at 0.1C $\times$ average discharge voltage.

$$\text{Volumetric energy density} = \text{gravimetric energy density x compaction density}.$$

The volumetric energy density is mainly used to characterize the energy density of the battery.

Table 2: Comparison of performances of various examples and comparative examples

| Example | Compaction density (g/cm$^3$) | Specific discharge capacity at 0.1C (mAh/g) | Average voltage (V) | Specific discharge capacity at 5C (mAh/g) | Gravimetric energy density (mWh/g) | Volumetric energy density (mWh/cm$^3$) |
|---|---|---|---|---|---|---|
| Example 1 | 2.52 | 152 | 3.82 | 123 | 580.6 | 1463.2 |
| Example 2 | 2.55 | 148 | 3.82 | 115 | 565.4 | 1441.7 |
| Example 3 | 2.52 | 152 | 3.81 | 125 | 579.1 | 1459.4 |
| Example 4 | 2.55 | 150 | 3.78 | 117 | 567.0 | 1445.9 |
| Example 5 | 2.46 | 153 | 3.83 | 126 | 586.5 | 1442.8 |
| Example 6 | 2.41 | 153 | 3.85 | 126 | 589.1 | 1419.6 |
| Example 7 | 2.49 | 147 | 3.82 | 112 | 561.1 | 1397.0 |
| Example 8 | 2.62 | 143 | 3.82 | 108 | 546.3 | 1431.2 |
| Example 9 | 2.35 | 152 | 3.82 | 125 | 580.6 | 1364.5 |
| Example 10 | 2.52 | 145 | 3.87 | 105 | 560.8 | 1413.3 |
| Example 11 | 2.52 | 153 | 3.72 | 120 | 568.7 | 1433.0 |
| Example 12 | 2.15 | 152 | 3.85 | 125 | 585.9 | 1259.7 |
| Example 13 | 2.42 | 148 | 3.79 | 105 | 560.4 | 1356.1 |
| Example 14 | 2.52 | 150 | 3.62 | 120 | 542.5 | 1367.1 |
| Example 15 | 2.66 | 133 | 3.82 | 101 | 508.5 | 1352.5 |
| Example 16 | 2.22 | 152 | 3.82 | 125 | 581.1 | 1290.1 |
| Comparative Example 1 | 2.52 | 123 | 3.81 | 85 | 468.6 | 1180.9 |
| Comparative Example 2 | 1.95 | 151 | 3.88 | 121 | 585.9 | 1142.5 |
| Comparative Example 3 | 2.12 | 148 | 3.82 | 112 | 565.4 | 1198.6 |
| Comparative Example 4 | 2.42 | 144 | 3.80 | 101 | 547.2 | 1324.2 |
| Comparative Example 5 | 2.48 | 143 | 3.75 | 98 | 536.3 | 1329.9 |

As shown in Tables 1 and 2, it can be seen through the results of comparison of Examples 1-16 and Comparative Examples 2-5 that in the comparative example, the battery prepared with lithium iron manganese phosphate particles of large particle size alone has not only low energy density, and also poor rate performance; and although the battery prepared with lithium iron manganese phosphate particles of small particle size alone has better rate performance than the battery prepared with lithium iron manganese phosphate particle of large particle size alone, the energy density is lower. That is to say, the battery prepared with lithium iron manganese phosphate particles of single particle size cannot have both high rate performance and high energy density, and the comprehensive electrochemical performance is relatively poor. In contrast, in the examples of the present disclosure, the first lithium iron manganese phosphate particle and the second lithium iron manganese phosphate particle of different particle sizes are blended and filled to each other. As a result, the compaction density of the positive electrode sheet is improved, and the battery is ensured to have a higher discharge specific capacity. That is, both the energy density of the battery and the rate performance of the battery are improved, and thus the battery has excellent comprehensive electrochemical performances.

As can be seen from the results of comparison of Examples 1-16 and Comparative Example 1, because of the use of lithium iron manganese phosphate particles of small particle size having a high manganese content blended with lithium iron manganese phosphate particles of large particle size having a low manganese content, the rate performance and energy density are more excellent in the examples of the present disclosure than those in Comparative Example 1 using lithium iron manganese phosphate particles of small particle size having a low manganese content blended with lithium iron manganese phosphate particles of large particle size having a high manganese content, Therefore, the comprehensive electrochemical performance of the battery is greatly improved.

As can be seen from the results of comparison of Example 1, Example 2, Example 8, Example 9, Example 15, and Example 16, by controlling the particle sizes of the first lithium iron manganese phosphate particle and the second lithium iron manganese phosphate particle respectively in a proper range, the comprehensive electrochemical performance of the battery is improved.

As can be seen through comparison of Example 1, Example 3, Example 4, Example 10, Example 11, and Example 14, by controlling the relative manganese contents of the first lithium iron manganese phosphate particle and the second lithium iron manganese phosphate particle respectively in a proper range, the comprehensive electrochemical performance of battery can also be optimized.

As can be seen through comparison of Example 1, Example 5, Example 6, Example 7, Example 12, and Example 13, by controlling the mixing ratio of the first lithium iron manganese phosphate particle and the second lithium iron manganese phosphate particle in a proper range, the compaction density and capacity per gram of the battery are optimized, to improve the comprehensive electrochemical performance of the battery.

In summary, in the present disclosure, by setting the first lithium iron manganese phosphate particle of small particle size to have a high manganese content and the second lithium iron manganese phosphate particle of large particle size to have a low manganese content, the battery has both excellent rate performance and energy density. That is to say, the comprehensive electrochemical performance of the battery is optimized.

It should be understood that the terms "first", and "second" are used merely for the purpose of description, and shall not be construed as indicating or implying relative importance or implying a quantity of indicated technical features. Therefore, a feature restricted by "first" or "second" may explicitly or implicitly include one or more of the features. In the description of embodiments of the present disclosure, "a plurality of " means two or more, unless explicitly specified.

In the description of the specification, the description with reference to the terms "an embodiment", "some embodiments", "exemplary embodiments", "example" or "some examples" and so on means that a specific feature, structure, material or characteristic described in connection with the embodiment or example are embraced in at least one embodiment or example of the present disclosure. In the specification, exemplary descriptions of the foregoing terms do not necessarily refer to the same embodiment or example. In addition, the described specific feature, structure, material, or characteristic may be combined in a proper manner in any one or more of the embodiments or examples.

It should be understood that the application of the present disclosure is not limited to the examples give above. Modifications and changes can be made by those skilled in the art in accordance with the above description, which are intended to be contemplated in the protection scope of the appended claims. Those of ordinary skill in the art can understand that all or part of the processes implementing the above-described embodiments and equivalent changes made according to the claims of the present disclosure are all contemplated in the scope of the present disclosure.

**Claims**

1. A positive electrode active material, comprising a first lithium iron manganese phosphate particle and a second lithium iron manganese phosphate particle, a particle size $D_{50}$ of the first lithium iron manganese phosphate particle being less than a particle size $D_{50}$ of the second lithium iron manganese phosphate particle, a Mn/(Mn+Fe) molar ratio in the first lithium iron manganese phosphate particle being x, a Mn/(Mn+Fe) molar ratio in the second lithium iron manganese phosphate particle being y, and x>y.

2. The positive electrode active material according to claim 1, wherein the particle size $D_{50}$ of the first lithium iron manganese phosphate particle ranges from 50 nm to 350 nm, and the particle size $D_{50}$ of the second lithium iron manganese phosphate particle ranges from 500 nm to 2000 nm.

3. The positive electrode active material according to claim 1 or 2, wherein $0.7 \leq x \leq 0.85$, and $0.3 \leq y \leq 0.65$.

4. The positive electrode active material according to any one of claims 1 to 3, wherein a weight ratio of the first lithium iron manganese phosphate particle to the second lithium iron manganese phosphate particle in the positive electrode active material ranges from 0.2 to 1.

5. The positive electrode active material according to any one of claims 1 to 4, wherein $0.7 \leq x \leq 0.8$, and $0.4 \leq y \leq 0.6$.

6. The positive electrode active material according to any one of claims 1 to 5, wherein a Mn/(Mn+Fe) molar ratio in the positive electrode active material ranges from 0.36 to 0.75.

7. The positive electrode active material according to any one of claims 1 to 6, wherein a material of the first lithium iron manganese phosphate particle comprises at least one of $LiMn_{0.8}Fe_{0.2}PO_4$ and $LiMn_{0.7}Fe_{0.3}PO_4$; and/or
a material of the second lithium iron manganese phosphate particle comprises at least one of $LiMn_{0.55}Fe_{0.45}PO_4$ and $LiMn_{0.4}Fe_{0.6}PO_4$.

8. A positive electrode, comprising a positive electrode active material according to any one of claims 1 to 7.

9. The positive electrode according to claim 8, the positive electrode comprising a current collector and a positive electrode active material layer arranged on the current collector, the positive electrode active material layer comprising the positive electrode active material, and a compaction density of the positive electrode active material layer ranging from 2.35 g/cm$^3$ to 2.62 g/cm$^3$.

10. A battery, comprising a positive electrode according to claim 8 or 9.

11. A device, comprising a battery according to claim 10, the device comprising an electric device or an energy storage system.

FIG. 1

FIG. 2

FIG. 3

FIG. 4

Europäisches
Patentamt

European
Patent Office

Office européen
des brevets

# EUROPEAN SEARCH REPORT

**Application Number**

EP 24 22 3496

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 115 911 291 A (BYD CO LTD) 4 April 2023 (2023-04-04) | 1-8,10, 11 | INV. H01M4/58 |
| Y | * page 3, paragraph 0037 - page 9, paragraph 0102; claims 1-14; figures 1-3; example 6; table 1 * | 9 | H01M4/505 H01M4/36 H01M4/136 H01M10/0525 |
| | ----- | | |
| X | CN 114 665 076 A (HUBEI HUNDRED MILLION WEFT POWER CO LTD) 24 June 2022 (2022-06-24) | 1,2,4, 6-8,10, 11 | ADD. H01M4/02 |
| Y | * page 1, paragraph 0002 - page 4, paragraph 0047; claims 1-10; figure 1 * | 9 | |
| | ----- | | |
| Y | US 2022/173377 A1 (KONG DEWEN [CN] ET AL) 2 June 2022 (2022-06-02) * page 7, paragraph 0076 - paragraph 0077; figures 1, 2 * * page 10, paragraph 0097 * | 9 | |
| | ----- | | |
| T | "A Basic Guide to Particle Characterization", Malvern Instruments Worldwide - White Paper, 2 May 2012 (2012-05-02), pages 1-26, XP055089322, Retrieved from the Internet: URL:http://golik.co.il/Data/ABasicGuidtoPa rticleCharacterization(2)_1962085150.pdf [retrieved on 2020-05-15] * the whole document * | 1,2 | |
| | ----- | | |

**TECHNICAL FIELDS SEARCHED (IPC)**

H01M

The present search report has been drawn up for all claims

| Place of search | Date of completion of the search | Examiner |
|---|---|---|
| Munich | 5 May 2025 | Polisski, Sergej |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 24 22 3496

This annex lists the patent family members relating to the patent documents cited in the above-mentioned European search report.
The members are as contained in the European Patent Office EDP file on
The European Patent Office is in no way liable for these particulars which are merely given for the purpose of information.

05-05-2025

| Patent document cited in search report | | Publication date | Patent family member(s) | | Publication date |
|---|---|---|---|---|---|
| CN 115911291 | A | 04-04-2023 | CN | 115911291 A | 04-04-2023 |
| | | | EP | 4343888 A1 | 27-03-2024 |
| | | | JP | 2024531041 A | 29-08-2024 |
| | | | KR | 20240017067 A | 06-02-2024 |
| | | | US | 2024186490 A1 | 06-06-2024 |
| | | | WO | 2023046048 A1 | 30-03-2023 |
| CN 114665076 | A | 24-06-2022 | CN | 114665076 A | 24-06-2022 |
| | | | EP | 4485569 A1 | 01-01-2025 |
| | | | US | 2025015265 A1 | 09-01-2025 |
| | | | WO | 2023179788 A1 | 28-09-2023 |
| US 2022173377 | A1 | 02-06-2022 | CN | 114597346 A | 07-06-2022 |
| | | | DE | 102021114594 A1 | 02-06-2022 |
| | | | US | 2022173377 A1 | 02-06-2022 |

EPO FORM P0459

For more details about this annex : see Official Journal of the European Patent Office, No. 12/82